# EUROPEAN PATENT APPLICATION

(11) **EP 4 742 050 A1**
(43) Date of publication of application: **13.05.2026**
(21) Application number: 25207197.2
(22) Date of filing: 07.10.2025
(51) Int. Cl.: G06F 13/28

(54) **CIRCUITS AND METHODS FOR DIRECT MEMORY ACCESS USING A NETWORK-ON-CHIP**

(30) Priority: 12.11.2024 US 202418945209
(71) Applicant: Altera Corporation, San Jose, CA 95134 (US)
(72) Inventor: SHIRVAIKAR, Tara, San Francisco, 94107 (US); WEBER, Scott, Piedmont, 94611 (US); LOH, Zhi-Hern, 309130 Singapore (SG); BLACKBURN, Jarrod, Austin, 78736 (US); HANSEN, Ian, Toronto, M4E3X4 (CA)
(74) Representative: Viering, Jentschura & Partner mbB Patent- und Rechtsanwälte

(57) **Abstract**

A configurable integrated circuit includes a network-on-chip and a response buffer circuit coupled to the network-on-chip. The response buffer circuit includes a direct memory access circuit and a controller circuit. The direct memory access circuit generates read requests and write requests to access memory circuits. The controller circuit provides the read requests and the write requests to the memory circuits through the network-on-chip. The controller circuit exchanges data with the memory circuits for the read requests and the write requests.

## Description

### BACKGROUND

Configurable integrated circuits (ICs) can be configured by users to implement desired custom logic functions. In a typical scenario, a logic designer uses computer-aided design (CAD) tools to design a custom circuit design. When the design process is complete, the computer-aided design tools generate an image containing configuration data bits. The configuration data bits are then loaded into configuration memory elements that configure configurable logic circuits in the integrated circuit to perform the functions of the custom circuit design.

### BRIEF DESCRIPTION OF DRAWINGS

Figure 1 is a diagram that illustrates microarchitecture of a portion of an integrated circuit (IC) that includes a main network-on-chip (MNOC), a response buffer circuit including a direct memory access (DMA) circuit, and a micro-network-on-chip (uNOC).
Figure 2A is a diagram that illustrates an example of a status query performed by a host by sending a read request with an initial write request and write data to a response buffer circuit.
Figure 2B is a diagram that illustrates an example of a status query performed by a host using a push/push write request to a localized mailbox.
Figure 3 is a diagram that illustrates an example of a system where a host is sending a descriptor to the DMA circuit of Figure 1, then sending a status request on that transaction, and finally receiving a status response.
Figure 4 is a diagram that illustrates examples of states of a finite state machine (FSM) in the FSM circuit of Figure 1 and transitions between the states.
Figure 5 is a diagram that illustrates components in a fabric sector of an integrated circuit (IC) that can implement read and write transactions to memory.
Figure 6 is a diagram that illustrates an example of a system that can be used for a two-dimensional (2D) read or write application.
Figure 7 is a diagram that illustrates an example of a system that can be used for a three-dimensional (3D) read or write application.
Figure 8 is a diagram of an illustrative example of a configurable integrated circuit (IC).
Figure 9A illustrates a block diagram of a system that can be used to implement a circuit design to be programmed into a programmable logic device using design software.
Figure 9B is a diagram that depicts an example of a programmable logic device that includes fabric dies and base dies that are coupled to one another via microbumps.
Figure 10 is a block diagram illustrating a computing system configured to implement one or more aspects of the embodiments described herein.

### DETAILED DESCRIPTION

In some types of previously known configurable integrated circuits (ICs), such as field programmable gate arrays (FPGAs), direct and remote proxy transactions to memory circuits in the ICs were initiated by external hosts. This technique did not allow for strided memory access or indirection, was not optimized for use cases that take advantage of a central scheduler, and was not optimized for three dimensional (3D) use cases.

According to some examples disclosed herein, a DMA (Direct Memory Access) circuit in a response buffer (RB) circuit in an integrated circuit (IC) performs efficient access to memory circuit blocks by controlling transactions all over the IC (e.g., within a fabric region of the IC) by emphasizing transaction indirection. The response buffer circuit is coupled to a micro-Network-On-Chip (micro-NOC). The DMA circuit enhances overall system efficiency and throughput by enabling a central scheduler (or multiple schedulers) to control transactions all over the IC. The DMA enables artificial intelligence (AI) use cases, more direct communication with three-dimensional (3D) memories, and communication with block random access memory (BRAM) embedded data in the IC.

According to some examples, the DMA circuit can also include a finite state machine (FSM) that unrolls a received descriptor that includes a read or write request to be sent out, a control status register (CSR) circuit including a content addressable memory (CAM) that keeps track of outstanding transactions, and an error monitoring circuit block that constantly polls for returning error signals. Each transaction can be a read or write transaction. Each read transaction and each write transaction can include one or more read requests and/or write requests, as disclosed below.

The DMA circuit also includes key striding and transaction control capabilities. In addition, the DMA circuit can update a mailbox (e.g., that is local to a host), after the transaction is complete. The DMA circuit has the advantage of having indirection that allows a user to efficiently access all of the embedded BRAM in the IC and external 3D memory ICs that are in communication with the IC along the micro-network-on-chip (uNOC). Being local to the host, the mailbox minimizes the latency initially required for the host to poll for completion, increasing overall transactional efficiency. The DMA circuit is also highly configurable, allowing the user maximal flexibility over transfer completion synchronization, mailbox status locations and configurations, and advanced interface manipulation.

One or more specific examples are described below. In an effort to provide a concise description of these examples, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Throughout the specification, and in the claims, the terms "connected" and "connection" mean a direct electrical connection between the circuits that are connected, without any intermediary devices. The terms "coupled" and "coupling" mean either a direct electrical connection between circuits or an indirect electrical connection through one or more passive or active intermediary devices that allows the transfer of information between circuits. The term "circuit" may mean one or more passive and/or active electrical components that are arranged to cooperate with one another to provide a desired function.

This disclosure discusses integrated circuit devices, including configurable (programmable) integrated circuits, such as field programmable gate arrays (FPGAs) and programmable logic devices. As discussed herein, an integrated circuit (IC) can include hard logic and/or soft logic. The circuits in an integrated circuit device (e.g., in a configurable IC) that are configurable by an end user are referred to as "soft logic." "Hard logic" generally refers to circuits in an integrated circuit device that have substantially less configurable features than soft logic or no configurable features.

Data transfers between a block random access memory (BRAM) and a peripheral memory typically happen frequently in a configurable IC. In order to offload the host/initiator from manually moving data around a system, a direct memory access (DMA) circuit is provided in a response buffer circuit to provide efficient indirection, and to save soft logic resources for computational use, rather than for routing use. The DMA circuit can use descriptors to perform data movement operations across and between BRAMs, 3D memories, and peripheral memories. The descriptors can have different transfer sizes, and different source and destination addresses. Within each descriptor, the host-specified transaction request is completely configurable. Examples for placement of the host include the fabric region (including configurable logic) in the configurable integrated circuit (IC), a hard or soft processor within the configurable IC, or an integrated circuit die connected to the configurable IC.

The DMA circuit operates in conjunction with a processing element (PE) and a host scheduler. The host scheduler handles the transfer of data between off-chip or remote memories and on-chip memories coupled to the micro-NOC by sending descriptors to the DMA. The descriptors can be generated at compile time and written to an interface from the host scheduler. The host scheduler has the capability to send descriptors to any of the DMA circuits in the IC. The IC can have one or more DMA circuits in each response buffer (RB) circuit in the IC. The PE refers to data operations performed in memory coupled to the micro-NOC. Each response buffer (RB) circuit has at least one DMA circuit that issues commands to one or more micro-NOC columns coupled to that RB circuit, depending on how the corresponding descriptor is unrolled. Rules can determine when the descriptors can be sent by the host scheduler to avoid causing corrupted/invalid data on the memories coupled to each micro-NOC.

The DMA circuit receives descriptors embedded in channels of an interface of the RB circuit. Both the RB circuit, and the DMA circuit within it, are end-to-end back pressured. A deadlock does not occur on the micro-NOC because of the ring structure of the NOC, the end-to-end back pressuring of the micro-NOC flow, and the structure of the DMA circuit. Because of these features, virtual channels on the micro-NOC are also not necessary. If new descriptors arrive and the DMA circuit is stalled, the descriptors back up into the NOC, without causing deadlock.

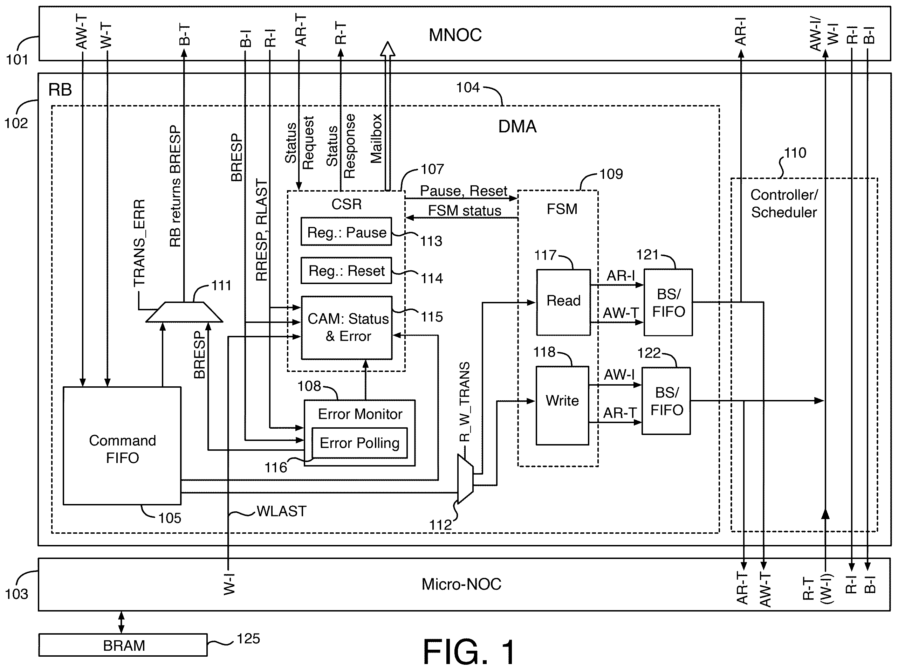

Figure 1 is a diagram that illustrates the microarchitecture of a portion of an integrated circuit (IC) that includes a main network-on-chip (MNOC) 101, a response buffer (RB) circuit 102, a micro-network-on-chip (micro-NOC or uNOC) 103, and block random access memory (BRAM) 125. The response buffer (RB) circuit 102 includes a DMA (Direct Memory Access) circuit 104 and a response buffer (RB) controller/scheduler circuit 110. The DMA circuit 104 includes a command first-in-first-out (FIFO) circuit 105, a control status register (CSR) circuit 107, an error monitor circuit 108, a finite state machine circuit (FSM) 109, multiplexer circuits 111-112, and barrel shifter (BS)/first-in-first-out (FIFO) circuits 121-122. The CSR circuit 107 includes a register 113 for pause, a register 114 for reset, and content addressable memory (CAM) 115 for status and error storage. The error monitor circuit 108 includes an error polling circuit 116. The FSM circuit 109 processes read transactions 117 and write transactions 118. Dotted lines are shown around some of the blocks in Figure (FIG.) 1 to improve visualization of the signal lines going in and out of these blocks. The DMA circuit 104 can be optimized to have a small IC area footprint.

The RB 102 is coupled to the MNOC 101 and to the micro-NOC 103 through conductors. According to some examples, an IC can have multiple RB circuits 102 as shown in FIG. 1 that are each coupled to the MNOC 101 and to the micro-NOC 103. The IC of FIG. 1 can be any type of integrated circuit (IC), such as a configurable IC (e.g., a field programmable gate array (FPGA) or programmable logic device (PLD)), a microprocessor IC, a graphics processing unit IC, a memory IC, an application specific IC, a transceiver IC, etc. In the examples disclosed herein, the circuitry, methods, and systems are described in the context of a configurable IC, such as an FPGA or PLD for the purpose of illustration.

The response buffer (RB) circuit 102 of FIG. 1 can be used to perform two-dimensional (2D) read and write transactions and three-dimensional (3D) read and write transactions. 2D transactions are read and write transactions to and from memory circuits within the IC of FIG. 1 and in external peripheral memory ICs that are coupled in the same plane as the IC of FIG. 1, along the length and/or width of the IC. 3D transactions are read and write transactions to and from external memory ICs that are coupled to, and vertically stacked with, the IC of FIG. 1. Each read transaction and each write transaction may include one or more read requests and/or write requests. Read and write transactions are also referred to herein simply as transactions.

In the following discussion and in the figures, reference is made to various terms that are used in the Advanced Extensible Interface 4 (AXI4) interface protocol as examples that are not intended to be limiting. As used below, an initiator may be a manager, and a target may be a subordinate. It should be understood that the techniques disclosed herein can be used with any interface protocol. The AXI4 channels, requests, and responses used herein are listed below.

AR-I is a read request originating from the initiator (manager interface).

AR-T is a read request (or status request) going into the target (subordinate interface).

R-I is a read response coming back to the initiator.

R-T is a read response (or status response) leaving the target.

AW-I is a write request originating from the initiator.

AW-T is a write request going into the target.

W-I is a write data channel originating from the initiator.

W-T is a write data channel going into the target.

B-I is a write response coming back to the initiator.

B-T is a write response leaving the target.

The discussion below also references some specific AXI4 signals. For example, ARID is a read address ID signal from an AR channel that is the identification tag for the read address group of signals. ARID matches the RID generated for a transaction. RID is a read ID tag signal from an R channel that is the identification tag for the read data group of signals generated by a target. RID matches an ARID given for a transaction. AWID is a write address ID signal from a W channel that is the identification tag for the write address group of signals. AxID refers to both AWID and ARID.

RRESP is a signal from the R channel that indicates the status of a transaction. RRESP indicates whether a transaction is performed, or if the transaction has hit a slave error or decode error. BRESP is a signal in a B channel that indicates the status of a transaction. BRESP indicates whether a transaction is performed, or if the transaction has hit a slave error or decode error. xRESP refers to RRESP and BRESP.

RLAST is a read last signal from the R channel that indicates the last transfer in a read transaction. WLAST is a write last signal from the W channel that indicates the last transfer in a write transaction. xLAST refers to both RLAST and WLAST. WDATA-T is a write data field in a W channel coming into the target interface. In the context of DMA circuit 104, the WDATA-T is the incoming signal that contains the descriptors.

SOP (start of packet) is a signal that is sent to memories coupled to the micro-NOC 103 to ensure that these memories are ready to read and write data from and to the micro-NOC 103. SID (Stream Identifier) is an identifier that logically groups block random access memories (BRAMs) 125 along the micro-NOC 103 column into groups.

From the perspective of a target RB circuit 102, a read transaction occurs when the DMA circuit 104 initiates a read request (AR-I) from the RB circuit 102. The RB controller/scheduler circuit 110 receives the read request (AR-I) from DMA circuit 104 and then sends the read request (AR-I) to memory through the MNOC 101. Read response (R-I) data generated in response to the read request (AR-I) returns from the memory to RB controller/scheduler 110 via MNOC 101, and then the RB controller/scheduler 110 writes the read response (R-I) data to the block random access memory (BRAM) 125 through the micro-NOC 103.

In a write transaction, the DMA circuit 104 generates a read request (AR-T), and the RB controller/scheduler 110 sends the read request (AR-T) through the micro-NOC 103 to read write data from the BRAM 125. A write request (AW-I) is then generated from the unrolled descriptor, which specifies each configurable AW field. The micro-NOC provides the read response (R-T), which becomes the write data (W-I) that is sent out to the MNOC 101 from the RB circuit 102. The DMA circuit 104 generates the write request (AW-I), and the RB controller/scheduler 110 provides the write request (AW-I) and write data (W-I) to memory through the MNOC 101. The AW-I and W-I commands do not have to be sent out at the same time. Then, a write response (B-I) from the memory (e.g. peripheral memory) returns to the DMA circuit 104 to be processed. In some examples, the AR/AW requests are not directly sent, but instead information on the range of addresses to read or write is communicated by the RB circuit 102. In other examples, the full AR/AW requests are sent by the RB circuit 102. As used herein, a transfer follows the typical DMA definition of a whole descriptor block movement. The DMA circuit 104 can serialize requests and return the requests in the order in which the requests were received from the host.

A high-level flow for a 2D read transaction is now described. Initially, a descriptor embedded in the W channel is transmitted into DMA circuit 104 in the IC after the RB circuit 102 performs a handshake with a host. The DMA circuit 104 acts as a target when receiving the descriptor command. The FSM 109 in the DMA circuit 104 unrolls the descriptor into a read request (AR-I) and a write request (AW-T). The BS/FIFO 121 serializes these commands so the AW-T is sent to the RB controller/scheduler 110 first, followed by the AR-I. In some embodiments, the RB controller/scheduler 110 uses the address information embedded in the AW-T to send out a start of packet (SOP) to ensure that the BRAMs 125 are ready to receive the incoming read response (R-I) data. Then, the RB controller/scheduler 110 sends out the read request (AR-I) through MNOC 101 to read from memory (e.g., peripheral memories). The DMA circuit 104 acts as an initiator when sending out a new transaction. Eventually, read response (R-I) data is returned from the memory through MNOC 101 to RB controller/scheduler 110. The RB controller/scheduler 110 then maps the incoming read response (R-I) data to be written as write data (W-T) to the correct BRAM 125 through a column of the micro-NOC 103. The connection with the host is then finished.

A high-level flow for a 2D write transaction is now described. Initially, a descriptor is transmitted into DMA circuit 104 after the RB circuit 102 performs a handshake with the host. The DMA circuit 104 acts as a target when receiving the descriptor command. The DMA circuit 104 unrolls the descriptor into a write request (AW-I). To get the write data (W-I), the DMA circuit 104 generates a read request (ART). In some embodiments, the RB controller/scheduler 110 then sends an SOP, followed by the read request (AR-T) to the target BRAM 125 through micro-NOC 103. Then, read response data (R-T/W-I) is sent back to RB controller/scheduler 110 in RB circuit 102 through micro-NOC 103 from the BRAMs. The RB controller/scheduler 110 then sends both the write request AW-I and the write data W-I received from the BRAM 125 through MNOC 101 to be written to memory (e.g., peripheral memories). The AW-I and W-I commands do not have to be sent out at the same time. The DMA circuit 104 functions as an initiator when sending out a new transaction. The RB controller/scheduler 110 receives the returning write response B-I from the memory. The connection with the host is then finished.

The command first-in-first-out (FIFO) circuit 105 can be, as a specific example that is not intended to be limiting, an 8-deep, 256 bit-wide FIFO buffer that holds all DMA descriptors that are waiting to be unrolled. In some implementations, as soon as the descriptor is loaded into the command FIFO circuit 105, a write response B-T is returned to the host from command FIFO circuit 105 through multiplexer circuit 111.

In other implementations, the write response B-T is returned upon completion of the full transaction. If the previous descriptor ended in a bus error, and the descriptor came from the same host, the automatic BRESP signal is overwritten by a BRESP signal that identifies the error and that is generated by error monitor circuit 108. Multiplexer circuit 111 is then configured using select signal TRANS_ERR to provide the BRESP signal from error monitor circuit 108 as the write response B-T to the host.

As an example that is not intended to be limiting, the descriptor is located in the WDATA field of a write data channel W-T, while a write request channel AW-T is used to route the descriptor to the target DMA circuit 104 in the IC. As another specific example that is not intended to be limiting, 2 or more descriptors can be packed into a single WDATA field. Descriptor concepts and the respective fields are now described.

For DMA transaction interleaving, a transaction identifier (AxID) is used for the unrolled transaction. The default mode is that all transaction identifiers AxID are set to 0 to maintain all order within and between all host-issued transactions, especially on the NOCs. A user may be able to configure the transaction identifier field to optimize transaction throughput and latency by allowing DMA transaction interleaving. Also, the Tag field is used as a transaction identifier by the host for status requests. As a specific example that is not intended to be limiting, the Tag field can have 6 bits to match a NOC that can have up to 64 outstanding transactions in order to maintain bandwidth.

For transaction completion synchronization, a signal that indicates if the transaction is done early is used to configure when the CAM circuit 115 and the mailboxes are updated with the completion status. If this signal indicates the transaction is not done early, the DMA circuit 104 does not assert that the transfer is complete, until all the responses for that transfer return. If this signal indicates that the transaction is done early, the DMA circuit 104 asserts completion when the transactions are posted. Use of this signal facilitates synchronization for a user, because this signal is used to ensure that the buffers are fully updated before the user reads from the buffers. This signal can be used on the last descriptor in a transaction. For example, if a user has 10 DMA transfers and needs to synchronize the completion of the 10^{th} transfer, the user can set this signal to 1 for the first 9 descriptors, and then set this signal to 0 for the 10^{th} descriptor to make sure that the buffers accessed have the latest data.

Strided access is often critical for artificial intelligence (AI) workloads, image and video processing, and very large length Fast Fourier Transforms (FFTs), in which intermediate stages are spilled to dynamic random access memory (DRAM). For strided memory access in the RB circuit 102, various fields can be used. As an example, a first field can indicate the number of bytes to increment the current target memory address on every completed transaction to complete the memory access. A second field can indicate the number of bytes to skip after the first field has completed to get to the next memory access point during strided memory access. A third field can be the total number of transactions to be performed in a strided access pattern.

In some embodiments, the DMA circuit 104 is multi-host, which means that the DMA circuit 104 can handle having multiple hosts send descriptors to the same DMA circuit 104 at the same time. In other embodiments, the DMA circuit 104 is single-host, meaning that the DMA circuit 104 can establish a handshake with a host, complete the transactions of that host, and close the connection with that host before establishing a connection with another host. Once there is a descriptor stored in the command FIFO circuit 105, the command FIFO circuit 105 handshakes with the CSR 107 to make sure that there is enough space in the CAM 115, and FIFO circuit 105 handshakes with the FSM 109 to make sure that there is not a descriptor currently being unrolled. Once both handshakes occur, the descriptor is popped and pushed forward to the FSM circuit 109 to be unrolled. If an unrolled descriptor for a transaction is stalled and back-pressured, that transaction is back-pressured into buffers in the NOC so that future DMA descriptors are not prevented from being pushed forward. The entire flow is end-to-end back-pressured. Each descriptor is unrolled one at a time, but reentrancy can be allowed (e.g., there can be multiple unrolled descriptors and transactions in flight). These transactions are all tracked by an identifier and tag in the CAM circuit 115.

The CSR circuit 107 controls holding the status and error information of each of the outstanding transactions for the DMA circuit 104 in CAM circuit 115 and pause and reset signals in register circuits 113-114, respectively. To track this information for each read and write transaction, the CSR circuit 107 uses CAM circuit 115 to store a unique host-given identifier (ID) and status information for each transaction. The status information includes percent completion for strided transactions, whether a transaction is completed, and the error type and address, in case of an error. This information is useful for user debugging and scheduler planning.

A more technical description of a transaction flow for DMA circuit 104 is now provided. If a read or write transaction is new, the transaction is identified as new, because a unique AxID and Tag concatenated vector for that transaction is not yet a key in CAM circuit 115. The CSR circuit 107 loads the AxID into an empty slot in CAM circuit 115. The field that indicates the percentage of the transaction completed is initially set by the newly unrolled descriptor. After the descriptor is pushed out by FSM circuit 109, and as xLASTs are transmitted back to RB circuit 102 and are snooped by DMA circuit 104, this field updates until the transaction is completed. At this point, a transaction complete signal goes high. Depending on the mailbox configuration, the mailbox is updated with the AxID of the completed transaction, and the transaction gets pushed out of CAM circuit 115.

If the transaction hits an error, error polling circuit 116 sends an error message (xRESP) to CAM circuit 115, and the address page where the error was hit is stored in CAM circuit 115. When the host pings DMA circuit 104 for a status update, the error message is sent to the host, and is pushed out of the CAM circuit 115.

The DMA circuit 104 uses one reset, a cold power-on-reset (POR), and also a FIFO Flush signal. The FIFO Flush signal can be accessed by the user for debugging purposes, or just to reset the registers 113-114 and the FSM circuit 109. Only trusted sources can access the reset and the FIFO Flush signal and send these signals to DMA circuit 104. If the RB circuit 102 detects an invalid host address, the transaction results in an error.

A target DMA circuit 104 uses a read identifier (RID) tracking mechanism for read transactions. The RID tracking mechanism is central to DMA transaction interleaving, because the RID tracking mechanism specifically enables read transaction interleaving, allowing a user more degrees of freedom when determining how to execute a group of transactions. The RID tracking mechanism also allows more finely controlled memory access, because the RID tracking mechanism enables two transactions to access different parts of the same BRAM memory.

For non-DMA initiated transactions, the SID memory group initiates the AR-I, so the SID memory group is expecting to receive back an R-I to the memory group. However, when the DMA circuit 104 sends out a read request (AR-I), and receives the returning read response (R-I) data for the read request, the AR-I/R-I is mapped to the AW-T/W-T channels. Thus, instead of just streaming directly into a memory group, the RID from the returning R-I is tracked and mapped to the AR-I sent out previously. This ensures that the incoming read response R-I data is written to the correct address within the correct memory group along the micro-NOC 103. Thus, in the embodiment with more finely controlled BRAM access, the RB 102 can include an RID tracking circuit that a user can use to write to any of the addressable memories within that memory group.

According to an example, the CSR circuit 107 can include an RID tracking circuit having three elements that all have a depth matching the maximum number of stream identifiers (SIDs): a linked list, a CAM, and a free pool first-in-first-out (FIFO) buffer. The CAM uses the incoming read identifier (RID) and SID as a key, and returns a head pointer to a linked list for the corresponding transaction. The linked list points to a BRAM address. The free pool FIFO buffer allows indexing into the linked list. This structure allows for read interleaving complexity, and also for a user to read from the same memory group.

A more flexible implementation of DMA circuit 104 uses this mechanism to ensure that different read address identifiers (ARIDs) and read identifiers (RIDs) reach the correct address within a memory group. In another implementation of the DMA circuit 104 that limits the user to a single AxID per memory group at a time, the returning data is serialized, and the tracking block is not needed.

Often, when a host sends a descriptor to DMA circuit 104 for a transaction, the host needs to be able to check completion status of the transaction and receive any messages in case of a bus error. The DMA circuit 104 can perform various transaction status query mechanisms. Each of these transaction status query mechanisms differ in terms of latency with regards to the host and necessary configurations of the micro-NOC 103. According to various implementations, a host can perform a status query by (1) sending a read request AR-I command with an initial write request AW/W-I, (2) by performing AR-I polling, or (3) by performing a push/push write request AW/W-I write to a localized mailbox.

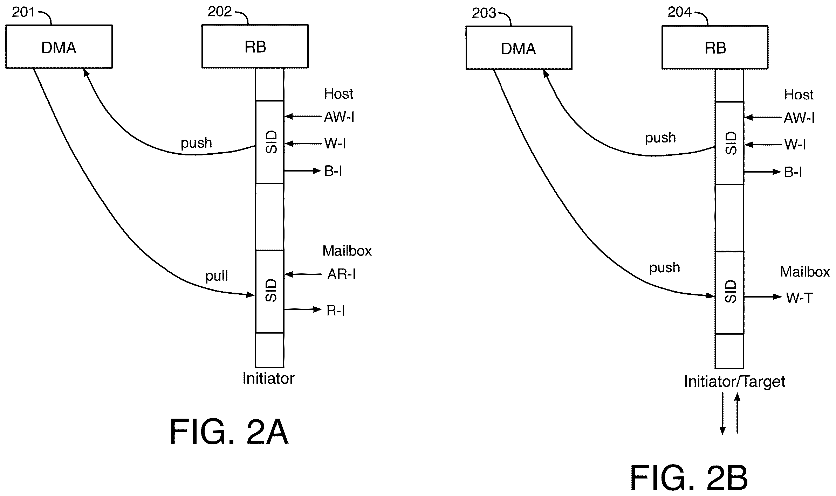

Figure 2A is a diagram that illustrates an example of a status query performed by a host by sending a read request AR-I with an initial write request and write data AW-I/W-I to a response buffer (RB) circuit 202 in an integrated circuit (IC). Along with the initial write request/write data AW-I/W-I that contains a descriptor, the host sends a read request AR-I/AR-T to a DMA (Direct Memory Access) circuit 201 (e.g., DMA circuit 104) at the same time. The write request/write data correspond to an SID (Stream Identifier) of a set of block random access memories (BRAMs) along a micro-NOC. Upon arrival, the read request AR-I/AR-T is stored in DMA circuit 201 as the descriptor gets unrolled and begins to get executed. When the transaction is complete, the DMA circuit 201 pushes out a delayed read response R-T/R-I back to the host that contains information detailing the transaction ID, transaction completion, error information, and the fill status of the first-in-first-out (FIFO) buffers in command FIFO circuit 105. Because the read request AR-T is already being stored in DMA circuit 201, the latency of the returning read response R-T is half that of performing AR-I polling, which completes a full round trip to receive status.

When the read request AR-I/AR-T is received by the RB circuit 202, the DMA circuit 201 ties the read request AR-I/AR-T to the initial write request AW/W-T/W-I using the lower bits of the address fields. The lower bits of the addresses are the same, indicative of the host that initiated the transaction and the host-identified Tag. As a result, the incoming AR-T status query is able to access the unrolled AW/W-T transaction information to send back to the host in a delayed read response R-T.

According to an alternative implementation, a host can also perform a status query by performing read request AR-I polling. Referring to FIG. 1, if a host wants to check the status of a transaction after a descriptor has been sent to RB circuit 102, the host can send a polling read request AR-I to the target DMA circuit 104. Upon receipt of the polling read request AR-T, the DMA circuit 104 responds immediately with a read response R-T that contains error registers in the CSR circuit 107, the current state of FSM circuit 109, a fill level of command FIFO circuit 105, and a tag to confirm that the status is for the correct transaction.

According to an example, the host can send a read request AR-I, wait for the immediate R-T read response, and only upon receiving the response, send another polling read request AR-I. This implementation minimizes traffic on the MNOC 101, while still receiving relevant status, completion, and error information.

In the case of an error, the DMA circuit 104 returns a write response B-T containing the error back to the correct host to notify the host. To get more detailed error information, the host then sends a read request AR-I to the DMA circuit 104. The target DMA circuit 104 then responds with the address that the error occurred at and any other relevant information.

The host sends a polling read request AR-I if (1) the host received an error BRESP message, (2) the host needs to determine the fill level of command FIFO circuit 105 to determine how many more descriptors can be sent, or (3) the host needs to check transaction completion without using a group of BRAMs in another micro-NOC 103 column, as can happen with a local BRAM mailbox, described below. As with the example disclosed herein with respect to FIG. 2A, when the read request AR-T is received by RB circuit 102, DMA circuit 104 ties the read request to the correct write request AW/W-T using the host address stored within the transaction, as well as the host-given tag.

According to yet another alternative implementation, a host can also perform a status query by performing a push/push write request AW/W-I to a localized mailbox (e.g., in a BRAM). Figure 2B is a diagram that illustrates an example of a status query performed by a host using a push/push write request to a localized mailbox. The purpose of the mailbox is to check the completion status of a transaction much faster than the read request AR-I techniques discussed above. The host (or a processing element (PE)) enables the mailbox in order to quickly check which transactions have been completed so that the host/PE can then process that data.

In some implementations, the mailbox can be located on the initiating micro-NOC 103 column to minimize the distance the host status request has to travel. In other implementations, to maximize ease of use, the mailbox can be located on any other micro-NOC 103 column or close to the main processing element. Enabling this mailbox uses 1 SID/memory group for the column of the micro-NOC 103.

In the example of FIG. 2B, the host sends a write request AW-I and write data W-I to the RB circuit 204 (e.g., RB circuit 102), which are pushed to the DMA circuit 203 (e.g., a DMA circuit 104) to be unrolled and sent out. Upon completion of the transaction, the DMA circuit 203 pushes a write response B-I back to the host, and pushes a write request AW-T and write data W-T to the mailbox. The mailbox location is chosen by the user and is configurable. The address of the mailbox is in the descriptor of the initial transaction sent from the host.

The mailbox only includes completed transactions for the hosts that specified that particular mailbox, which may be determined before runtime. When a transaction completes, the target DMA circuit 204 sends that transaction tag and AxID to the mailbox to be loaded into the correct FIFO, which is organized per SID to avoid head of line blocking. Then, the host can pop off the completed transaction tags from the FIFO that matches the SID of the host.

Referring again to FIG. 1, the purpose of the error monitor circuit 108 in DMA circuit 104 is to poll xRESP signals for any errors and to forward these errors to the CSR circuit 107 for storage. The error polling circuit 116 is a sub-block of error monitor circuit 108 that controls monitoring the incoming RRESP and BRESP signals from MNOC 101. If xRESP reads any value other than 0, then an error has occurred, and an Error Flag signal in error polling block 116 goes high. Then, error polling circuit 116 sends the xRESP value to error registers in CAM circuit 115 in CSR circuit 107 for storage, and the error polling circuit 116 sends out a value in signal BRESP (e.g., BRESP = 2) to the host via multiplexer circuit 111 by configuring multiplexer circuit 111 to select signal BRESP coming from the error monitor circuit 108 using select signal TRANS_ERR.

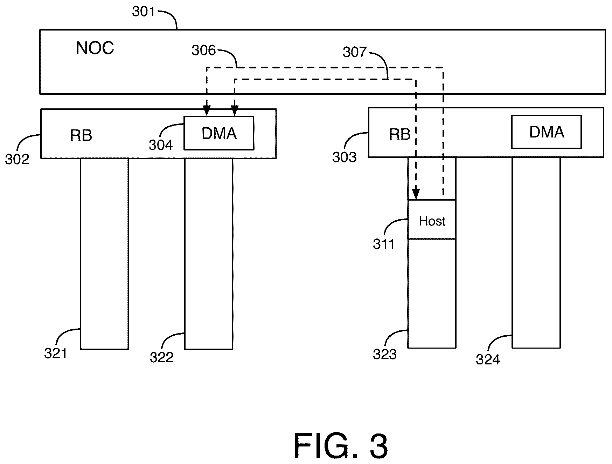

Figure 3 is a diagram that illustrates an example of a system where the host is sending a descriptor to the DMA block 104, then sending a status request on that transaction, and finally receiving a status response. The circuits shown in FIG. 3 include a network-on-chip (NOC) 301, response buffer (RB) circuits 302-303 (e.g., two RB circuits 102), and micro-NOCs 321-324 in an integrated circuit (IC). Micro-NOCs 321-322 are coupled to RB circuit 302, and micro-NOCs 323-324 are coupled to RB circuit 303. Along with an initial write request/write data AW-I/W-I that contains a descriptor, a host 311 sends a read request AR-T through micro-NOC 323 and NOC 301 to DMA circuit 304 (e.g., a DMA circuit 104) in RB circuit 302, as shown by arrow 306. Upon arrival, this read request AR-T is held in storage as the descriptor gets unrolled and begins to get executed. When the transaction is complete, the DMA circuit 304 pushes out a delayed read response R-T back to the host 311 that contains information detailing the transaction ID, error information, transaction completed status, and the fill status of the command FIFO circuit 105 through NOC 301. Because the read request is already being stored in DMA circuit 304, the latency of the returning read response R-T is half that of using regular polling, which must complete a full round trip to receive status.

In FIG. 3, the delayed read response R-T is stored in DMA circuit 304, until the transaction completes. Then, DMA circuit 304 sends the delayed status response R-T back to the host 311 through NOC 301 and micro-NOC 323 in response to a status query AR, as shown by arrow 307. The delayed read response R-T status query is a global option that can be enabled by a user (e.g., using a user interface). The delayed read response R-I/R-T may be desirable if a use case is based in a state machine or processor core that does not have a timeout mechanism. For example, if a circuit design is composed of many microcontrollers that receive data returning in a stream, the delayed read response R-I/R-T status query enables host efficiency by reducing round trip latency.

For a polling read response R-T, if the host 311 wants to check the status of a transaction after the descriptor has been sent, the host 311 sends a read request AR-T to the target DMA circuit 304 through micro-NOC 323 and NOC 301, as shown by arrow 306. Upon receipt of the polling read request AR-T, the DMA circuit 304 responds immediately with a read response R-T, as shown by arrow 307. The read response R-T contains both error registers in the CSR circuit 107, a current state of FSM circuit 109, a fill level of command FIFO circuit 105, and the tag to confirm that this status is for the correct transaction. As mentioned above, a poll from the host 311 can be sent at any time after the write request/write data with the descriptor has been pushed into the DMA circuit 304. An exclusively polling R-T response status query mechanism can be used, for example, if a circuit design is processor centric or very high performance.

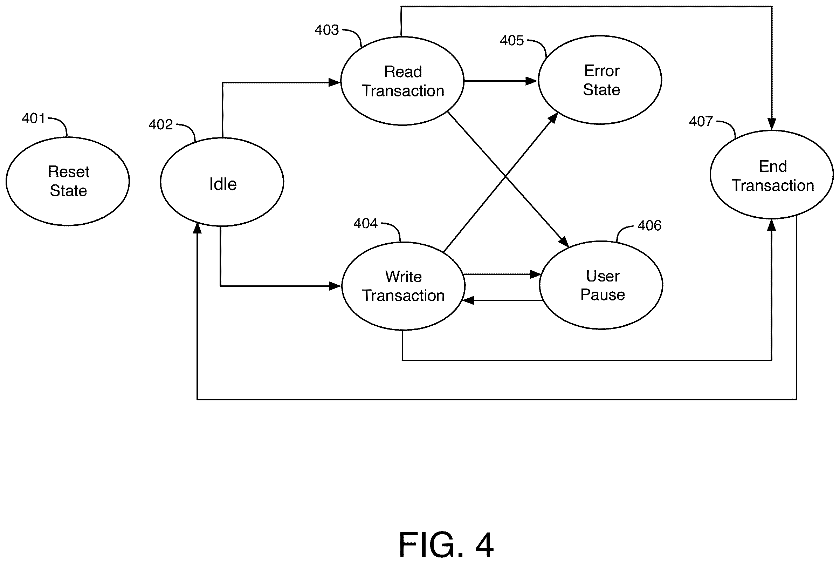

Figure 4 is a diagram that illustrates examples of states of a finite state machine (FSM) in the FSM circuit 109 of DMA circuit 104 in FIG. 1 and transitions between the states. The finite state machine (FSM) implemented by FSM circuit 109 has a reset state 401, an idle state 402, a read transaction state 403, a write transaction state 404, an error state 405, a user pause state 406, and an end transaction state 407. The FSM implemented by FSM circuit 109 transitions between the states 401-407 as shown by the arrows in FIG. 4. The FSM enters the reset state 401 in the cold POR described above. The FSM enters the error state 405 in response to any of the errors described above. The FSM idles in the idle state 402, pauses in user pause state 406, and ends a transaction in end transaction state 407.

The FSM circuit 109 in DMA circuit 104 controls the descriptor unrolling flow. The primary purpose of the FSM circuit 109 is to unroll incoming descriptors from command FIFO circuit 105, which are received through multiplexer circuit 112. When the FSM circuit 109 is available, an FSM Ready signal is asserted. If there is valid data in the command FIFO circuit 105, and if there is storage space in CAM circuit 115 in CSR circuit 107, a new descriptor is sent to FSM circuit 109. Once the new descriptor is received, a direction bit determines if the new descriptor is a read transaction or a write transaction, and then the FSM goes to the respective state 403 or 404. Striding logic for each of these states 403-404 unrolls and sends out each strided transfer, if needed. When pushing the transaction out, the FSM circuit 109 sends out both a read request AR-I and a write request AW-T if the transaction is a read transaction, or a write request AW-I and a read request AR-T if the transaction is a write transaction. When both transactions are pushed out of the FSM circuit 109, the transactions are sent to FIFO blocks 121-122 that serialize AW-T/AR-I and AR-T/AW-I, respectively, to ensure that the micro-NOC 103 is ready before the data comes back.

To maintain the transaction protocol, the FSM circuit 109 pushes out only full transactions. For both types of transactions, the FSM circuit 109 maintains only one port each to help with serializing a transaction correctly. Referring again to FIG. 1, FSM circuit 109 receives read and write transactions from command FIFO circuit 105 through multiplexer circuit 112, which is configured by select signal R_W_TRANS. When pushing transactions out, the FSM circuit 109 sends out both read requests AR-I and write requests AW-T for read transactions 117, or write requests AW-I and read requests AR-T for write transactions 118. When read and write transactions 117-118 are pushed out, the transactions are sent to barrel shifter (BS)/FIFO circuits 121-122, respectively. The BS/FIFO circuit 121 ensures that if the transaction is a read transaction, the RB controller/scheduler 110 sends out the write request AW-T first (i.e., to ensure micro-NOC 103 bus is ready to receive the data), and then sends out the read request AR-I (i.e., to fetch the data) through MNOC 101. The BS/FIFO circuit 122 ensures that if the transaction is a write transaction, the RB controller/scheduler 110 sends the read request AR-T out first through micro-NOC 103, and then sends out the write request/write data AW-I/W-I through MNOC 101.

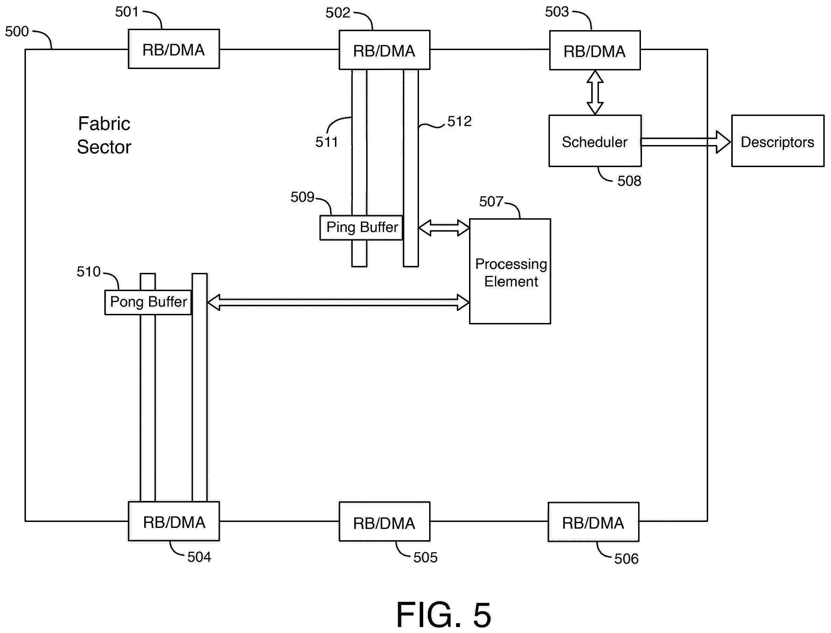

Figure 5 is a diagram that illustrates components in a fabric sector 500 of a configurable integrated circuit (IC) that can implement read and write transactions to memory. The components shown in FIG. 5 include 6 response buffer (RB) circuits 501-506, a processing element (PE) 507, a scheduler 508, micro-NOCs 511-512 coupled to RB circuit 502, a ping buffer 509, and a pong buffer 510. Each of the RB circuits 501-506 includes a DMA circuit 104, as disclosed herein with respect to FIG. 1.

Examples of operations that can be performed to implement a transaction are now described using the components shown in fabric sector 500. Initially, the scheduler 508 issues a write request AW to write a DMA descriptor to a target response buffer circuit (e.g., RB circuit 502). Next, the target response buffer circuit 502 receives the write request and extracts write data WDATA that has DMA descriptor information. Then, the DMA circuit 104 in RB circuit 502 issues read/write requests targeting an appropriate SID mapped from the memory address field of the descriptor. Then, data is read/written from/to corresponding SID BRAMs in fabric sector 500, illustrated as ping buffer 509 in FIG. 5, via micro-NOC 511. The scheduler 508 coordinates necessary handshake signals to ensure that the micro-NOC 511 is ready to receive the transaction.

The processing element 507 also monitors a micro-NOC enable signal to ensure that the BRAMs are able to be accessed, have valid data, and to determine when the DMA transaction to the corresponding SID buffer is complete. Then, the transactions can start processing on the buffers, illustrated as ping buffer 509 in FIG. 5. The processing element 507 finishes processing on the ping buffer 509 and then signals to the scheduler 508 via the micro-NOC 512 that the scheduler 508 can proceed with new DMA descriptors targeting this SID buffer. The processing element 507 sends a packet including the SID, a ready bit, and the BRAM address or processing element block tag to scheduler 508. The processing element (PE) 507 then finishes processing on the pong buffer 510. As a transaction is executing for a particular ping buffer 509, the data in the pong buffer 510 can be processed by the PE 507. Similarly, as a transaction is executing for a particular pong buffer 510, the data in the ping buffer 509 can be processed by the PE 507.

The scheduler 508 can be implemented in soft logic using one of several different configurations to push the descriptors to the DMA circuits. The example of FIG. 5 implements a double buffering scheme using ping buffer 509 and pong buffer 510, so that the wait time between data transactions finishing and the processing element 507 starting to process a transaction is largely hidden. Software can keep track of the ping buffer 509 and the pong buffer 510.

The example of FIG. 5 maintains a stack of descriptors per SID buffer. The stacks are popped one descriptor at a time upon receiving a signal from the processing element 507 indicating that the processing element 507 is finished processing the data on the SID buffers. Ping-pong buffering between several SID buffers (e.g., ping buffer 509 and pong buffer 510) and processing element 507 can be accomplished using the components of FIG. 5. If buffers that span several SIDs are used, the processing element 507 can snoop on the micro-NOC enable signal of several SIDs to determine when to start processing data.

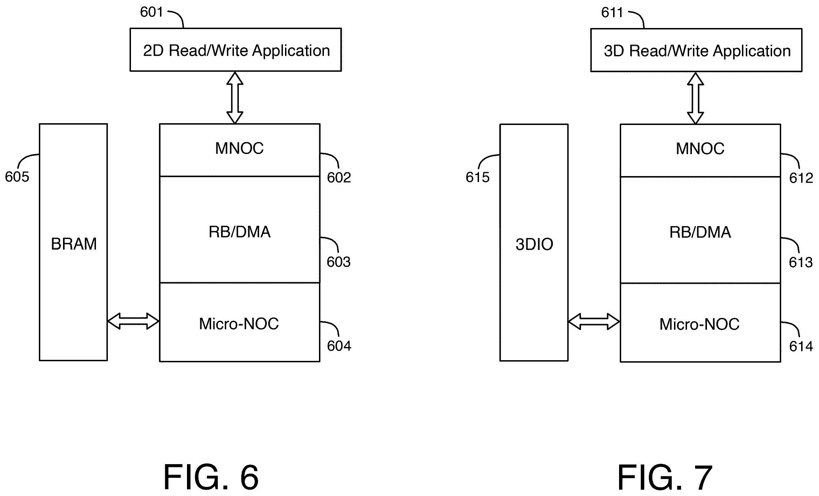

As described above, for 2D applications, the DMA descriptor targets a response buffer circuit, and then that response buffer circuit is an initiator for the DMA transaction. Figure 6 is a diagram that illustrates an example of a system that can be used for a two-dimensional (2D) read or write application. The system of FIG. 6 includes a 2D read or write application 601, a main NOC (MNOC) 602, a response buffer circuit 603 that includes a DMA circuit 104, a micro-NOC 604, and BRAM 605.

A 2D read application 601 initiates a write request AW-T with write data W -T to RB/DMA 603 via MNOC 602. A starting address/SOP is sent from the RB controller/scheduler 110 in RB/DMA circuit 603 through a column of micro-NOC 604 to BRAM 605. The RB/DMA 603 sends a read request AR-I to the 2D read application 601 through MNOC 602. The 2D read application 601 then sends a read response R-I, remapped as write data W-T, to write to the BRAM 605 through MNOC 602, RB/DMA circuit 603, and micro-NOC 604. The SOP addresses are sent from the micro-NOC controller in the response buffer circuit, and the specific micro-NOC addresses are specified by descriptor memory address fields.

A 2D write application 601 can initiate a write request AW-T with write data W-T to RB/DMA 603 via MNOC 602. A write data/read response W-I/R-T starting address is sent from the RB controller/scheduler 110 in RB/DMA circuit 603 through a column of micro-NOC 604 to BRAM 605. The RB/DMA 603 then sends a write request AW-I to the 2D write application 601 via MNOC 602. Then, the BRAM 605 sends write data W-I, remapped as a read response R-T, read from the BRAM 605 to RB/DMA circuit 603 through a column of micro-NOC 604. The RB/DMA circuit 603 then sends the write data W-I to the 2D write application 601 through MNOC 602. The 2D write application 601 then sends a read response B-I to RB/DMA circuit 603 through MNOC 602.

Figure 7 is a diagram that illustrates an example of a system that can be used for a three-dimensional (3D) read or write application for performing 3D transactions. Three dimensional (3D) transactions are transactions to/from memory IC dies vertically stacked with the main IC of FIG. 1. The system of FIG. 7 includes a 3D read or write application 611, a main NOC (MNOC) 612, a response buffer circuit 613 that includes a DMA circuit 104, a micro-NOC 614, and a 3D input/output (3DIO) interface 615 (e.g., coupled to a vertically stacked memory IC die). Unlike 2D transactions where the AR-T/AW-T commands are used only to wake up the micro-NOC coupled memories along the column with an SOP, the 3D transactions use full AR-T and AW-T commands that are sent down to the 3D memory. The 3D transactions are full, legal Advanced Extensible Interface (AXI) transactions, and the 3DIO interface 615 sends the B-T back to the initiating RB circuit 102.

A write request AW-T is initiated with write data W -T to RB/DMA 613 via MNOC 612 with the 3D read application 611 as the target. A write request AW-T is sent from the RB/DMA circuit 613 through a column of micro-NOC 614 and 3DIO interface 615 to a vertically stacked IC. The RB/DMA 613 then sends a read request AR-I through MNOC 612 to the 3D read application 611. The 3D read application 611 then sends a read response R-I, remapped as write data W-T, to write into the vertically stacked IC through MNOC 612, RB/DMA circuit 613, a column of micro-NOC 614, and the 3DIO interface 615. The write response B-T is then sent back through the 3DIO interface 615 and a column of the micro-NOC 614 to the RB/DMA circuit 613.

A write request AW-T is initiated with write data W-T to RB/DMA 613 via MNOC 612 with the 3D write application 611 as a target. A read request AR-T to establish a starting address is sent from RB/DMA circuit 613 through a column of micro-NOC 614 and 3DIO interface 615 to a vertically stacked IC. The RB/DMA 613 then sends a write request AW-I to the 3D write application 611 via MNOC 612. Then, a read response R-T, remapped as write data W-I, is sent from the vertically stacked IC to the 3D write application 611 through the 3DIO interface 615, a column of micro-NOC 614, RB/DMA circuit 613, and MNOC 612. The 3D write application 611 then sends a read response BI to RB/DMA circuit 613 through MNOC 612.

According to some exemplary applications of the DMA circuit 104, artificial intelligence (AI) workloads can transmit activation tensors from external memory to on-chip memory in smaller chunks, which is referred to as tiling, using the techniques disclosed herein. Because the data is typically padded to facilitate memory and interface access patterns, the DMA circuit 104 can be used to provide strided memory access to the external memory for Al workloads.

Most of the DMA transactions previously discussed herein allow either a read transaction (e.g., reading from peripheral memories and writing to the BRAMs coupled to the micro-NOC) or a write transaction (e.g., reading from the BRAMs coupled to the micro-NOC and writing to the peripheral memories) for a particular set of BRAMs. Another common use for the DMA circuit 104 is to read-modify-write to a set of BRAMs. As such, another application for DMA circuit 104 is to create a shared memory mode for DMA transactions, i.e., in a dynamic read response/write data (R-I/W-I) mode.

The high-level flow for this shared memory mode for DMA transactions is now described. First, a particular target DMA circuit 104 initiates a read transaction for SID A. Along the target micro-NOC column, a read response R-I arrives from the peripheral memories and is written into the set of BRAMs. Next, the fabric logic processes the data for the read transaction. Then, the target DMA circuit 104 initiates a write transaction for SID A, using aliasing to maintain the same SID. That processed data (which is still in that same set of BRAMs for SID A) is then sent to the DMA circuit 104 in the read response R-T (W-I) channel in order to be written back to the peripheral memories.

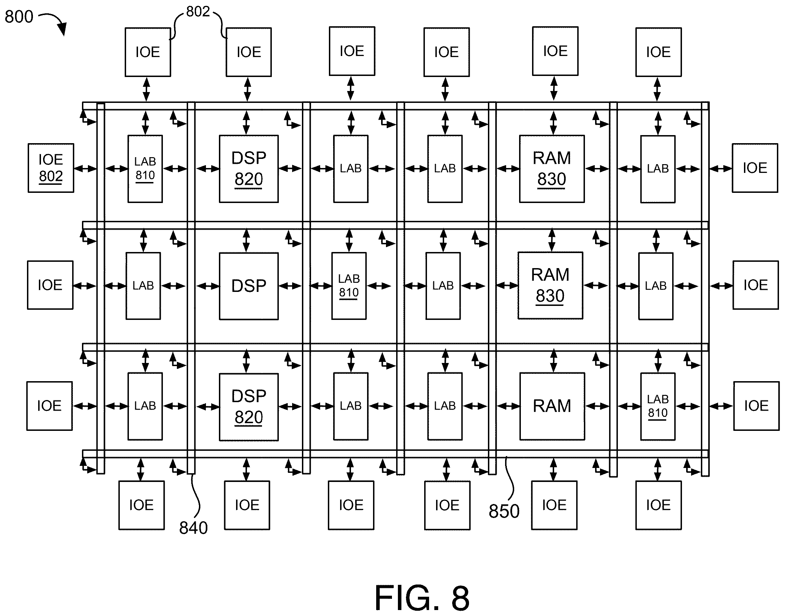

Figure 8 is a diagram of an illustrative example of a configurable integrated circuit (IC) 800. Configurable IC 800 is an example of an IC that can include the circuits and NOCs disclosed herein with respect to FIGS. 1-7. As shown in FIG. 8, the configurable integrated circuit 800 includes a two-dimensional array of configurable logic circuit blocks, including logic array blocks (LABs) 810 and other configurable logic circuit blocks, such as random access memory (RAM) blocks 830 (e.g., BRAMs) and digital signal processing (DSP) blocks 820, for example. Configurable logic circuit blocks, such as LABs 810, can include smaller configurable regions (e.g., configurable logic elements, configurable logic blocks, or adaptive logic modules (ALMs)) that receive input signals and perform custom functions on the input signals to produce output signals.

The configurable integrated circuit 800 also includes programmable interconnect circuitry in the form of vertical routing channels 840 (i.e., interconnects formed along a vertical axis of configurable integrated circuit 800) and horizontal routing channels 850 (i.e., interconnects formed along a horizontal axis of configurable integrated circuit 800), each routing channel including at least one track to route at least one wire. One or more of the routing channels 840 and/or 850 can be part of a network-on-chip (NOC) having router circuits.

In addition, the configurable integrated circuit 800 has input/output elements (IOEs) 802 (e.g., including IO circuit blocks) for driving signals off of configurable integrated circuit 800 and for receiving signals from other devices. Input/output elements 802 can include parallel input/output circuitry, serial data transceiver circuitry, differential receiver and transmitter circuitry, or other circuitry used to connect one integrated circuit to another integrated circuit. Input/output elements 802 can include general purpose input/output (GPIO) circuitry (e.g., on the top and bottoms edges of IC 800), high-speed input/output (HSIO) circuitry (e.g., on the left edge of IC 800), and on-package input/output (OPIOs) circuitry (e.g., on the right edge of IC 800).

As shown, input/output elements 802 can be located around the periphery of the IC. If desired, the configurable integrated circuit 800 can have input/output elements 802 arranged in different ways. For example, input/output elements 802 can form one or more columns of input/output elements that can be located anywhere on the configurable integrated circuit 800 (e.g., distributed evenly across the width of the configurable integrated circuit). If desired, input/output elements 802 can form one or more rows of input/output elements (e.g., distributed across the height of the configurable integrated circuit). Alternatively, input/output elements 802 can form islands of input/output elements that can be distributed over the surface of the configurable integrated circuit 800 or clustered in selected areas.

Note that other routing topologies, besides the topology of the interconnect circuitry depicted in FIG. 8, can be used. For example, the routing topology can include wires that travel diagonally or that travel horizontally and vertically along different parts of their extent as well as wires that are perpendicular to the device plane in the case of three dimensional integrated circuits, and the driver of a wire can be located at a different point than one end of a wire. The routing topology can include global wires that span substantially all of configurable integrated circuit 800, fractional global wires such as wires that span part of configurable integrated circuit 800, staggered wires of a particular length, smaller local wires, or any other suitable interconnection resource arrangement.

Furthermore, it should be understood that examples disclosed herein may be implemented in any type of integrated circuit. If desired, the functional blocks of such an integrated circuit can be arranged in more levels or layers in which multiple functional blocks are interconnected to form still larger blocks. Other device arrangements can use functional blocks that are not arranged in rows and columns.

Configurable integrated circuit 800 can also contain programmable memory elements. The memory elements can be loaded with configuration data (also called programming data) using input/output elements (IOEs) 802. Once loaded, the memory elements each provide a corresponding static control signal that controls the operation of an associated functional block (e.g., LABs 810, DSP 820, RAM 830, or input/output elements 802).

In a typical scenario, the outputs of the loaded memory elements are applied to the gates of field-effect transistors in a functional block to turn certain transistors on or off and thereby configure the logic in the functional block including the routing paths. Programmable logic circuit elements that are controlled in this way include parts of multiplexers (e.g., multiplexers used for forming routing paths in interconnect circuits), look-up tables, logic arrays, AND, OR, NAND, and NOR logic gates, pass gates, etc.

The memory elements can use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory or programmable memory elements.

The programmable memory elements can be organized in a configuration memory array consisting of rows and columns. A data register that spans across all columns and an address register that spans across all rows can receive configuration data. The configuration data can be shifted onto the data register. When the appropriate address register is asserted, the data register writes the configuration data to the configuration memory elements of the row that was designated by the address register.

Configurable integrated circuit 800 can include configuration memory that is organized in sectors, whereby a sector can include the configuration bits that specify the function and/or interconnections of the subcomponents and wires in or crossing that sector. Each sector can include separate data and address registers.

The configurable IC 800 of FIG. 8 is merely one example of an IC that can be used with embodiments disclosed herein. The embodiments disclosed herein can be used with any suitable electronic integrated circuit or system. For example, the embodiments disclosed herein can be used with numerous types of electronic devices such as processor integrated circuits, central processing units, memory integrated circuits, graphics processing unit integrated circuits, application specific standard products (ASSPs), application specific integrated circuits (ASICs), and configurable logic integrated circuits. Examples of configurable logic integrated circuits include programmable arrays logic (PALs), programmable logic arrays (PLAs), field programmable logic arrays (FPLAs), electrically programmable logic devices (EPLDs), electrically erasable programmable logic devices (EEPLDs), logic cell arrays (LCAs), complex programmable logic devices (CPLDs), and field programmable gate arrays (FPGAs), just to name a few.

The integrated circuits disclosed in one or more embodiments herein can be part of a data processing system that includes one or more of the following components: a processor; memory; input/output circuitry; and peripheral devices. The data processing system can be used in a wide variety of applications, such as computer networking, data networking, instrumentation, video processing, digital signal processing, or any suitable other application. The integrated circuits can be used to perform a variety of different logic functions.

In general, software and data for performing any of the functions disclosed herein can be stored in non-transitory computer readable storage media. Non-transitory computer readable storage media is tangible computer readable storage media that stores data and software for access at a later time, as opposed to media that only transmits propagating electrical signals (e.g., wires). The software code may sometimes be referred to as software, data, program instructions, instructions, or code. The non-transitory computer readable storage media can, for example, include computer memory chips, non-volatile memory such as non-volatile random-access memory (NVRAM), one or more hard drives (e.g., magnetic drives or solid state drives), one or more removable flash drives or other removable media, compact discs (CDs), digital versatile discs (DVDs), Blu-ray discs (BDs), other optical media, and floppy diskettes, tapes, or any other suitable memory or storage device(s).

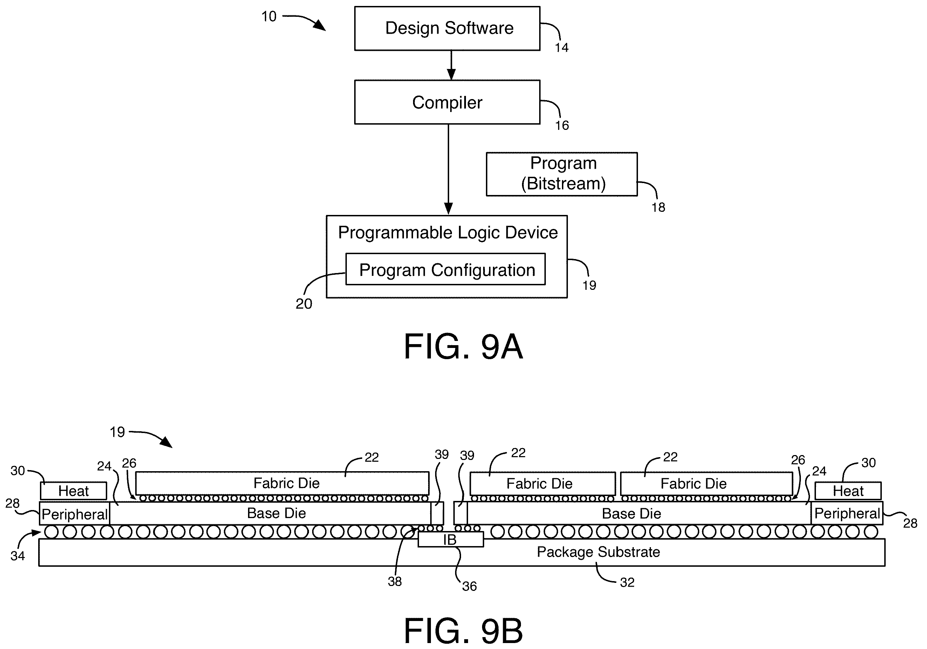

Figure 9A illustrates a block diagram of a system 10 that can be used to implement a circuit design to be programmed onto a programmable logic device 19 using design software. A designer can implement circuit design functionality on an integrated circuit, such as a reconfigurable programmable logic device 19 (e.g., a field programmable gate array (FPGA)). The designer can implement the circuit design to be programmed onto the programmable logic device 19 using design software 14. The design software 14 can use a compiler 16 to generate a low-level circuit-design program (bitstream) 18, sometimes known as a program object file and/or configuration program, that programs the programmable logic device 19. Thus, the compiler 16 can provide machine-readable instructions representative of the circuit design to the programmable logic device 19. For example, the programmable logic device 19 can receive one or more programs (bitstreams) 18 that describe the hardware implementations that should be stored in the programmable logic device 19. A program (bitstream) 18 can be programmed into the programmable logic device 19 as a configuration program 20. The configuration program 20 can, in some cases, represent an accelerator function to perform for machine learning, video processing, voice recognition, image recognition, or other highly specialized task.

In some implementations, a programmable logic device can be any integrated circuit device that includes a programmable logic device with two separate integrated circuit die where at least some of the programmable logic fabric is separated from at least some of the fabric support circuitry that operates the programmable logic fabric. One example of such a programmable logic device is shown in FIG. 9B, but many others can be used, and it should be understood that this disclosure is intended to encompass any suitable programmable logic device where programmable logic fabric and fabric support circuitry are at least partially separated on different integrated circuit die.

Figure 9B is a diagram that depicts an example of the programmable logic device 19 that includes three fabric die 22 and two base die 24 that are connected to one another via microbumps 26. In the example of FIG. 9B, at least some of the programmable logic fabric of the programmable logic device 19 is in the three fabric die 22, and at least some of the fabric support circuitry that operates the programmable logic fabric is in the two base die 24. For example, some of the circuitry of configurable IC 800 shown in FIG. 8 (e.g., LABs 810, DSP 820, and RAM 830) can be located in the fabric die 22 and some of the circuitry of IC 800 (e.g., input/output elements 802) can be located in the base die 24. As another example, the base die 24 can include 3D memory circuits that are accessible through micro-NOC 103 by an RB circuit 102 in the fabric die 22.

Although the fabric die 22 and base die 24 appear in a one-to-one relationship or a two-to-one relationship in FIG. 9B, other relationships can be used. For example, a single base die 24 can attach to several fabric die 22, or several base die 24 can attach to a single fabric die 22, or several base die 24 can attach to several fabric die 22 (e.g., in an interleaved pattern). Peripheral circuitry 28 can be attached to, embedded within, and/or disposed on top of the base die 24, and heat spreaders 30 can be used to reduce an accumulation of heat on the programmable logic device 19. The heat spreaders 30 can appear above, as pictured, and/or below the package (e.g., as a double-sided heat sink). The base die 24 can attach to a package substrate 32 via conductive bumps 34. In the example of FIG. 9B, two pairs of fabric die 22 and base die 24 are shown communicatively connected to one another via an interconnect bridge 36 (e.g., an embedded multi-die interconnect bridge (EMIB)) and microbumps 38 at bridge interfaces 39 in base die 24.

In combination, the fabric die 22 and the base die 24 can operate in combination as a programmable logic device 19 such as a field programmable gate array (FPGA). It should be understood that an FPGA can, for example, represent the type of circuitry, and/or a logical arrangement, of a programmable logic device when both the fabric die 22 and the base die 24 operate in combination. Moreover, an FPGA is discussed herein for the purposes of this example, though it should be understood that any suitable type of programmable logic device can be used.

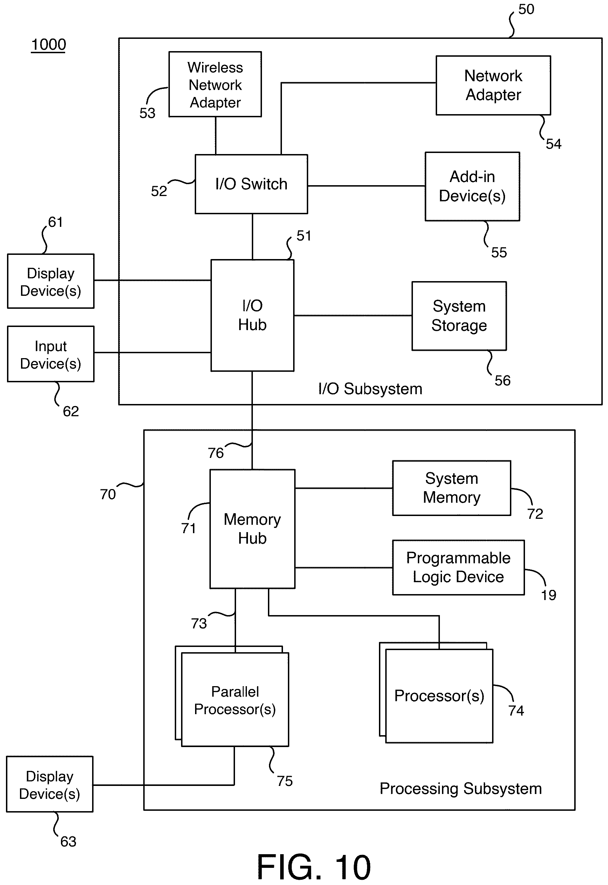

Figure 10 is a block diagram illustrating a computing system 1000 configured to implement one or more aspects of the embodiments described herein. The computing system 1000 includes a processing subsystem 70 having one or more processor(s) 74, a system memory 72, and a programmable logic device 19 communicating via an interconnection path that can include a memory hub 71. The memory hub 71 can be a separate component within a chipset component or can be integrated within the one or more processor(s) 74. The memory hub 71 couples with an input/output (I/O) subsystem 50 via a communication link 76. The I/O subsystem 50 includes an input/output (I/O) hub 51 that can enable the computing system 1000 to receive input from one or more input device(s) 62. Additionally, the I/O hub 51 can enable a display controller, which can be included in the one or more processor(s) 74, to provide outputs to one or more display device(s) 61. In one embodiment, the one or more display device(s) 61 coupled with the I/O hub 51 can include a local, internal, or embedded display device.

In one embodiment, the processing subsystem 70 includes one or more parallel processor(s) 75 coupled to memory hub 71 via a bus or other communication link 73. The communication link 73 can use one of any number of standards based communication link technologies or protocols, such as, but not limited to, PCI Express, or can be a vendor specific communications interface or communications fabric. In one embodiment, the one or more parallel processor(s) 75 form a computationally focused parallel or vector processing system that can include a large number of processing cores and/or processing clusters, such as a many integrated core (MIC) processor. In one embodiment, the one or more parallel processor(s) 75 form a graphics processing subsystem that can output pixels to one of the one or more display device(s) 61 coupled via the I/O Hub 51. The one or more parallel processor(s) 75 can also include a display controller and display interface (not shown) to enable a direct connection to one or more display device(s) 63.

Within the I/O subsystem 50, a system storage unit 56 can connect to the I/O hub 51 to provide a storage mechanism for the computing system 1000. An I/O switch 52 can be used to provide an interface mechanism to enable connections between the I/O hub 51 and other components, such as a network adapter 54 and/or a wireless network adapter 53 that can be integrated into the platform, and various other devices that can be added via one or more add-in device(s) 55. The network adapter 54 can be an Ethernet adapter or another wired network adapter. The wireless network adapter 53 can include one or more of a Wi-Fi, Bluetooth, near field communication (NFC), or other network device that includes one or more wireless radios.

The computing system 1000 can include other components not shown in FIG. 10, including other port connections, optical storage drives, video capture devices, and the like, that can also be connected to the I/O hub 51. Communication paths interconnecting the various components in FIG. 10 can be implemented using any suitable protocols, such as PCI (Peripheral Component Interconnect) based protocols (e.g., PCI-Express), or any other bus or point-to-point communication interfaces and/or protocol(s), such as the NV-Link high-speed interconnect, or interconnect protocols known in the art.

In one embodiment, the one or more parallel processor(s) 75 incorporate circuitry optimized for graphics and video processing, including, for example, video output circuitry, and constitutes a graphics processing unit (GPU). In another embodiment, the one or more parallel processor(s) 75 incorporate circuitry optimized for general purpose processing, while preserving the underlying computational architecture. In yet another embodiment, components of the computing system 1000 can be integrated with one or more other system elements on a single integrated circuit. For example, the one or more parallel processor(s) 75, memory hub 71, processor(s) 74, and I/O hub 51 can be integrated into a system on chip (SoC) integrated circuit. Alternatively, the components of the computing system 1000 can be integrated into a single package to form a system in package (SIP) configuration. In one embodiment, at least a portion of the components of the computing system 1000 can be integrated into a multi-chip module (MCM), which can be interconnected with other multi-chip modules into a modular computing system.

The computing system 1000 shown herein is illustrative. Other variations and modifications are also possible. The connection topology, including the number and arrangement of bridges, the number of processor(s) 74, and the number of parallel processor(s) 75, can be modified as desired. For instance, in some embodiments, system memory 72 is connected to the processor(s) 74 directly rather than through a bridge, while other devices communicate with system memory 72 via the memory hub 71 and the processor(s) 74. In other alternative topologies, the parallel processor(s) 75 are connected to the I/O hub 51 or directly to one of the one or more processor(s) 74, rather than to the memory hub 71. In other embodiments, the I/O hub 51 and memory hub 71 can be integrated into a single chip. Some embodiments can include two or more sets of processor(s) 74 attached via multiple sockets, which can couple with two or more instances of the parallel processor(s) 75.

Some of the particular components shown herein are optional and may not be included in all implementations of the computing system 1000. For example, any number of add-in cards or peripherals can be supported, or some components can be eliminated. Furthermore, some architectures can use different terminology for components similar to those illustrated in FIG. 10. For example, the memory hub 71 can be referred to as a Northbridge in some architectures, while the I/O hub 51 can be referred to as a Southbridge.

Additional examples are now described. Example 1 is a configurable integrated circuit comprising: a first network-on-chip; and a response buffer circuit coupled to the first network-on-chip wherein the response buffer circuit comprises a direct memory access circuit and a controller circuit, wherein the first network-on-chip is embedded in the configurable integrated circuit, wherein the direct memory access circuit generates first read requests and first write requests received from a host circuit to access first memory circuits, wherein the controller circuit provides the first read requests and the first write requests to the first memory circuits through the first network-on-chip, and wherein the controller circuit exchanges first data with the first memory circuits for the first read requests and the first write requests.

In Example 2, the configurable integrated circuit of Example 1 may optionally include, wherein the first memory circuits comprise block random access memory in the configurable integrated circuit.

In Example 3, the configurable integrated circuit of any one of Examples 1-2 may optionally include, wherein the first memory circuits comprise memory external to the configurable integrated circuit in at least one die stacked vertically with the configurable integrated circuit.

In Example 4, the configurable integrated circuit of any one of Examples 1-3 may optionally include, wherein the direct memory access circuit comprises a command first-in-first-out circuit that stores descriptors for read transactions and write transactions, and wherein the direct memory access circuit further comprises a finite state machine that uses the descriptors for the read transactions and the write transactions to generate the first read requests and the first write requests for the read transactions and for the write transactions.

In Example 5, the configurable integrated circuit of any one of Examples 1-4 may optionally include, wherein the direct memory access circuit comprises a control status register circuit that stores status, error, pause, and reset information of read transactions and write transactions corresponding to the first read requests and the first write requests.

In Example 6, the configurable integrated circuit of Example 5 may optionally include, wherein the control status register circuit comprises a content addressable memory that stores a unique identifier, completion status, error type for any error, and an address of the error in each of the read transactions and the write transactions.

In Example 7, the configurable integrated circuit of any one of Examples 1-6 may optionally include, wherein the direct memory access circuit comprises an error monitor circuit that polls incoming signals for errors in transactions that comprise the first read requests and the first write requests and forwards the errors to a storage circuit for storage.

In Example 8, the configurable integrated circuit of any one of Examples 1-7 further comprises: a second network-on-chip coupled to the response buffer circuit, wherein the controller circuit provides second read requests and second write requests to second memory circuits through the second network-on-chip, and wherein the controller circuit exchanges second data with the second memory circuits for the second read requests and the second write requests.

In Example 9, the configurable integrated circuit of Example 8 may optionally include, wherein the second memory circuits comprise memory external to the configurable integrated circuit in at least one die peripheral to the configurable integrated circuit.

Example 10 is a method for performing read transactions and write transactions in a configurable integrated circuit, the method comprising: generating read requests and write requests for the read transactions and for the write transactions to access memory circuits using a direct memory access circuit in the configurable integrated circuit; using a scheduler circuit in the configurable integrated circuit to provide the read requests and the write requests from the direct memory access circuit to the memory circuits through a first network-on-chip in the configurable integrated circuit; and exchanging data with the memory circuits for the read requests and the write requests using the scheduler circuit.

In Example 11, the method of Example 10 further comprises: sending a response to a status query for one of the read or write transactions that comprises an error value, a tag to confirm that the response is for the one of the read or write transactions from the direct memory access circuit, a fill level of a command first-in-first-out circuit that stores descriptors for the read transactions and for the write transactions in the direct memory access circuit, or a completion status of the one of the read or write transactions through a second network-on-chip in the configurable integrated circuit from the direct memory access circuit.

In Example 12, the method of any one of Examples 10-11 may optionally include, wherein the memory circuits are located in dies that are vertically stacked with the configurable integrated circuit, and wherein the read transactions and the write transactions are three dimensional transactions to and from the dies.

In Example 13, the method of any one of Examples 10-12 further comprises: using a read identifier tracking mechanism to track one of the read transactions by tracking and mapping a returning read response to one of the read requests to allow a user to write to any addressable memory within a memory group.

In Example 14, the method of any one of Examples 10-13 may optionally include, wherein generating the read requests and the write requests for the read transactions and for the write transactions further comprises: storing descriptors for the read transactions and the write transactions in a command first-in-first-out circuit in the direct memory access circuit, wherein the descriptors are configurable by a user to manipulate transaction synchronization, interleaving, and memory striding.

In Example 15, the method of any one of Examples 10-14 further comprises: storing descriptors for the read transactions and the write transactions in a first-in-first-out circuit in the direct memory access circuit; and processing the descriptors to generate the read requests and the write requests for the read transactions and for the write transactions using a finite state machine in the direct memory access circuit.

Example 16 is a non-transitory computer readable storage medium comprising instructions stored thereon that, when executed by a configurable integrated circuit, cause the configurable integrated circuit to: generate read requests and write requests to access memory circuits using a direct memory access circuit; provide the read requests and the write requests from the direct memory access circuit to the memory circuits through a network-on-chip using a controller circuit; and exchange data with the memory circuits for the read requests and the write requests using the controller circuit.

In Example 17, the non-transitory computer readable storage medium of Example 16 may optionally include, wherein the instructions further cause the configurable integrated circuit to: store status, error, pause, and reset information of read transactions and write transactions corresponding to the read requests and the write requests in a control status register circuit in the direct memory access circuit.

In Example 18, the non-transitory computer readable storage medium of any one of Examples 16-17 may optionally include, wherein the instructions further cause the configurable integrated circuit to: store descriptors for read transactions and write transactions in a first-in-first-out circuit in the direct memory access circuit; provide the descriptors to a finite state machine in the direct memory access circuit; and process the descriptors for the read transactions and the write transactions to generate the read requests and the write requests for the read transactions and for the write transactions using the finite state machine.

In Example 19, the non-transitory computer readable storage medium of any one of Examples 16-18 may optionally include, wherein the instructions further cause the configurable integrated circuit to: poll incoming signals for errors in transactions that comprise the read requests and the write requests using an error monitor circuit in the direct memory access circuit; and forward the errors to a storage circuit for storage.

In Example 20, the non-transitory computer readable storage medium of any one of Examples 16-19 may optionally include, wherein the instructions further cause the configurable integrated circuit to: exchange the data with the memory circuits for the read requests and the write requests through the network-on-chip using the controller circuit, wherein the network-on-chip is in the configurable integrated circuit.

The foregoing description of the exemplary embodiments has been presented for the purpose of illustration. The foregoing description is not intended to be exhaustive or to be limiting to the examples disclosed herein. The foregoing is merely illustrative of the principles of this disclosure and various modifications can be made by those skilled in the art. The foregoing embodiments may be implemented individually or in any combination.

## Claims

1. A configurable integrated circuit comprising:
a first network-on-chip; and
a response buffer circuit coupled to the first network-on-chip wherein the response buffer circuit comprises a direct memory access circuit and a controller circuit, wherein the first network-on-chip is embedded in the configurable integrated circuit, wherein the direct memory access circuit generates first read requests and first write requests received from a host circuit to access first memory circuits, wherein the controller circuit provides the first read requests and the first write requests to the first memory circuits through the first network-on-chip, and wherein the controller circuit exchanges first data with the first memory circuits for the first read requests and the first write requests.

2. The configurable integrated circuit of claim 1, wherein the first memory circuits comprise block random access memory in the configurable integrated circuit.

3. The configurable integrated circuit of any one of claims 1-2, wherein the first memory circuits comprise memory external to the configurable integrated circuit in at least one die stacked vertically with the configurable integrated circuit.

4. The configurable integrated circuit of any one of claims 1-3, wherein the direct memory access circuit comprises a command first-in-first-out circuit that stores descriptors for read transactions and write transactions, and wherein the direct memory access circuit further comprises a finite state machine that uses the descriptors for the read transactions and the write transactions to generate the first read requests and the first write requests for the read transactions and for the write transactions.

5. The configurable integrated circuit of any one of claims 1-4, wherein the direct memory access circuit comprises a control status register circuit that stores status, error, pause, and reset information of read transactions and write transactions corresponding to the first read requests and the first write requests.

6. The configurable integrated circuit of claim 5, wherein the control status register circuit comprises a content addressable memory that stores a unique identifier, completion status, error type for any error, and an address of the error in each of the read transactions and the write transactions.

7. The configurable integrated circuit of any one of claims 1-6, wherein the direct memory access circuit comprises an error monitor circuit that polls incoming signals for errors in transactions that comprise the first read requests and the first write requests and forwards the errors to a storage circuit for storage.

8. The configurable integrated circuit of any one of claims 1-7 further comprising:
a second network-on-chip coupled to the response buffer circuit, wherein the controller circuit provides second read requests and second write requests to second memory circuits through the second network-on-chip, and wherein the controller circuit exchanges second data with the second memory circuits for the second read requests and the second write requests.

9. The configurable integrated circuit of claim 8, wherein the second memory circuits comprise memory external to the configurable integrated circuit in at least one die peripheral to the configurable integrated circuit.

10. A method for performing read transactions and write transactions in a configurable integrated circuit, the method comprising:
generating read requests and write requests for the read transactions and for the write transactions to access memory circuits using a direct memory access circuit in the configurable integrated circuit;
using a scheduler circuit in the configurable integrated circuit to provide the read requests and the write requests from the direct memory access circuit to the memory circuits through a first network-on-chip in the configurable integrated circuit; and
exchanging data with the memory circuits for the read requests and the write requests using the scheduler circuit.

11. The method of claim 10 further comprising:
sending a response to a status query for one of the read or write transactions that comprises an error value, a tag to confirm that the response is for the one of the read or write transactions from the direct memory access circuit, a fill level of a command first-in-first-out circuit that stores descriptors for the read transactions and for the write transactions in the direct memory access circuit, or a completion status of the one of the read or write transactions through a second network-on-chip in the configurable integrated circuit from the direct memory access circuit.

12. The method of any one of claims 10-11, wherein the memory circuits are located in dies that are vertically stacked with the configurable integrated circuit, and wherein the read transactions and the write transactions are three dimensional transactions to and from the dies.

13. The method of any one of claims 10-12 further comprising:
using a read identifier tracking mechanism to track one of the read transactions by tracking and mapping a returning read response to one of the read requests to allow a user to write to any addressable memory within a memory group.

14. The method of any one of claims 10-13, wherein generating the read requests and the write requests for the read transactions and for the write transactions further comprises:
storing descriptors for the read transactions and the write transactions in a command first-in-first-out circuit in the direct memory access circuit, wherein the descriptors are configurable by a user to manipulate transaction synchronization, interleaving, and memory striding.

15. The method of any one of claims 10-14 further comprising:
storing descriptors for the read transactions and the write transactions in a first-in-first-out circuit in the direct memory access circuit; and
processing the descriptors to generate the read requests and the write requests for the read transactions and for the write transactions using a finite state machine in the direct memory access circuit.
